# EUROPÄISCHE PATENTANMELDUNG

(11) **EP 3 865 215 A1**
(43) Veröffentlichungstag der Anmeldung: **18.08.2021**
(21) Anmeldenummer: 21153636.2
(22) Anmeldetag: 27.01.2021
(51) Int. Cl.: B02C 17/18, B02C 17/16

(54) **TEMPERIERTES BAUTEIL UND VERFAHREN ZUR HERSTELLUNG EINES TEMPERIERTEN BAUTEILS**

(30) Priorität: 14.02.2020 DE 102020103848
(71) Anmelder: NETZSCH-Feinmahltechnik GmbH, 95100 Selb (DE)
(72) Erfinder: Möschl, Holger, 95100 Selb (DE)

(57) **Zusammenfassung**

Die Erfindung betrifft ein temperiertes Bauteil und ein Verfahren zur Herstellung eines temperierten Bauteils. Das temperierte Bauteil umfasst einen Grundkörper mit mindestens einem mit einem Temperiermittel durchströmbaren Hohlraum. Es ist vorgesehen, dass in einem ersten Bereich zwischen einer Innenmantelfläche des Hohlraums und einer Mantelfläche des Grundkörpers eine erste Wandstärke ausgebildet ist und dass in einem zweiten Bereich zwischen einer Innenmantelfläche des Hohlraums und einer Mantelfläche des Grundkörpers eine zweite Wandstärke ausgebildet ist. Der zweite Bereich ist ein Verschleißbereich des Bauteils und die zweite Wandstärke ist in diesem Verschleißbereich größer ist als die erste Wandstärke

## Beschreibung

Die vorliegende Erfindung betrifft ein temperiertes Bauteil und ein Verfahren zur Herstellung eines temperierten Bauteils gemäß den Merkmalen der unabhängigen Ansprüche.

### Stand der Technik

Viele Prozesse, insbesondere chemische, mechanische oder andere Prozesse, laufen unter Erzeugung von Prozesswärme ab, welche den Prozessablauf selbst beziehungsweise die eingesetzten Ausgangsstoffe negativ beeinflussen kann. Insbesondere weil beispielsweise die am Prozess beteiligten Stoffe temperaturempfindlich sind oder weil sich die Temperaturänderung auf die Prozessgeschwindigkeit auswirkt und damit eine geordnete Prozessführung erschwert. Aus diesem Grund ist es üblich, einen Prozessablauf zu stabilisieren, indem beispielsweise die erzeugte Prozesswärme mittels geeigneter Kühlvorrichtungen und/oder Kühlverfahren abgeleitet wird. Dagegen kann es für weitere Prozesse vorteilhaft sein, wenn diese unter Wärmezufuhr stattfinden.

In Behältern ablaufende Prozesse werden dabei meist über die Behälterwand temperiert, zum Beispiel durch an der Wand verlaufende Kühl- oder Warmwasserrohre oder indem ein weiterer, vom ersten Behälter radial beabstandet angeordneter Außenbehälter um den ersten Behälter herumgeführt wird, so dass sich zwischen den beiden Behältern ein Hohlraum bildet, durch welchen ein Fluidstrom, welcher ein Warmwasserstrom beziehungsweise ein Kühlmittelstrom sein kann, zum Transport der Prozesswärme geführt werden kann.

Ein industrieller Prozess, bei dem die Wärmeentstehung besonders problematisch sein kann, stellt der Zerkleinerungsprozess beispielsweise in Rührwerkskugelmühlen dar. In Abhängigkeit vom Produkt muss diese bei der Bearbeitung entstehende Wärme abgeführt werden bzw. es muss eine Wärmebildung verhindert werden. Die Problematik besteht in der Regel bei allen Rührwerkskugelmühlen, besonders ausgeprägt ist die Problematik bei Rührwerkskugelmühlen mit einem großen Mahlvolumen oder wenn ein höherer Leistungseintrag erwünscht wird. Zur Kühlung während des Mahlprozesses ist beispielsweise vorgesehen, den Mahlzylinder und/oder die Rührwelle kühlbar auszugestalten.

Beispielsweise beschreibt die Offenlegungsschrift DE 3614721 A1 die Ausstattung des Mahlbehälters mit einem Kühlmantel als bekannten Stand der Technik. Diese Schrift offenbart weiterhin, dass zudem der Rührwerksrotor an seinem Umfang mit wenigstens einem Kühlkanal versehen sein kann. Ein Mahlbehälter mit Kühlmantel wird weiterhin in der Offenlegungsschrift WO 2007/042059 A1 gezeigt. Weiterhin weist die in diesem Dokument beschriebene Rührwerksmühle einen Innenstator auf, der ebenfalls gekühlt werden kann. Das Rührwerk ist topfförmig ausgebildet und umfasst einen ringzylindrischen Rotor.

Problematisch ist insbesondere, dass die zu temperierenden Bauteile häufig ein Verschleißteil darstellen. Beispielsweise stellt die Rührwelle von Rührwerkskugelmühlen ein Verschleißteil dar, das insbesondere in Abhängigkeit vom bearbeiteten Mahlgut häufig ersetzt werden muss. Da die Herstellung von kühlbaren Rührwellen kostenintensiv ist, stellt dies einen maßgeblichen Kostenfaktor für den Betrieb einer solchen Rührwerkskugelmühle dar.

### Beschreibung

Die Aufgabe der Erfindung besteht darin, ein temperierbares Bauteil einfach und kostengünstig herzustellen, wobei insbesondere die Lebensdauer eines Bauteils, welches Verschleiß ausgesetzt ist, erhöht ist, so dass dieses weniger oft ausgetauscht werden muss.

Die obige Aufgabe wird durch ein temperiertes Bauteil und ein Verfahren zur Herstellung eines temperierten Bauteils gelöst, die die Merkmale in den unabhängigen Patentansprüchen umfassen. Weitere vorteilhafte Ausgestaltungen werden durch die Unteransprüche beschrieben.

Die Erfindung betrifft ein temperiertes Bauteil und ein Verfahren zur Herstellung eines temperierten Bauteils. Die Erfindung betrifft insbesondere eine kühlbare Rührwelle für den Einsatz in Hochleistungs- Rührwerkskugelmühlen.

Das temperierte Bauteil umfasst einen Grundkörper mit mindestens einem mit einem Temperiermittel durchströmbaren Hohlraum. In einem ersten Bereich ist zwischen einer Innenmantelfläche des Hohlraums und einer Mantelfläche des Grundkörpers, beispielsweise einer Außenmantelfläche des Grundkörpers, eine erste Wandstärke ausgebildet und in einem zweiten Bereich ist zwischen einer Innenmantelfläche des Hohlraums und einer Mantelfläche oder Außenmantelfläche des Grundkörpers mindestens eine zweite Wandstärke ausgebildet. Bei dem zweiten Bereich handelt es sich um einen sogenannten Verschleißbereich, in welchem im laufenden Betrieb ein insbesondere erhöhter Materialabtrag erfolgt. Um die Lebensdauer des Bauteils zu erhöhen, ist vorgesehen, dass die zweite Wandstärke zwischen dem Hohlraum und einer Mantelfläche des Grundkörpers des Bauteils in dem Verschleißbereich gegenüber der ersten Wandstärke erhöht ist.

Insbesondere wird vor der Planung und Herstellung des Bauteils mindestens ein Bereich ermittelt, in dem ein erhöhter Verschleiß des Bauteils stattfindet. Hierbei können geeignete Berechnungen angestellt und/oder herangezogen werden. Alternativ können auch bekannte Verschleißstellen im Rahmen der Konstruktionsüberlegungen für das Bauteil herangezogen werden. Insbesondere wird das Bauteil derart konzipiert, dass in Abhängigkeit von der Art und Stärke des in unterschiedlichen Bereichen erwarteten und/oder bekannten Verschleißes unterschiedliche Wandstärken zwischen einer dem Verschleiß ausgesetzten Mantelfläche des Bauteils und einem temperierbaren Hohlraum des Bauteils ausgebildet werden.

Der Hohlraum weist vorzugsweise einen Temperiermitteleingang auf, über den ein geeignetes Temperiermittel eingeführt werden kann. Weiterhin kann mindestens eine Temperiermittelausgang vorgesehen sein, über den das Temperiermittel wieder abgeführt wird. Das Temperiermittel kann in Abhängigkeit von den jeweiligen Produktionsprozessen insbesondere der Kühlung oder aber der Erwärmung des Bauteils dienen. Temperiermittel sind gasförmige, flüssige oder feste Stoffe oder Stoffgemische, die zum Abtransport oder zur Zuführung von Wärme eingesetzt werden. Als Temperiermittel wird vorzugsweise ein geeignet temperiertes Fluid eingesetzt. Beispielsweise wird zur Bauteilkühlung kaltes Wasser in den mindestens einen Hohlraum eingeleitet. Alternativ kann zur Bauteiltemperierung auch warmes oder heißes Wasser oder ein anderer Stoff oder Stoffgemisch mit geeigneter Temperatur verwendet werden.

Wenn nachfolgend von der Ausbildung des mit Temperiermittel durchströmbaren Hohlraums als Kühlkanal gesprochen wird, der mit einem Kühlmittel durchströmt wird, so bezieht sich die Beschreibung gleichermaßen auf Temperierkanäle, die mit einem Heizmittel durchströmt werden.

Gemäß einer bevorzugten Ausführungsform ist der mindestens eine mit einem Temperiermittel durchströmbare Hohlraum ein Temperierkanal, insbesondere ein Kühlkanal. Der Kühlkanal weist vorzugsweise in dem ersten verschleißfreien oder verschleißarmen Bereich eine erste Querschnittsfläche auf und in dem zweiten Verschleißbereich eine geringere zweite Querschnittsfläche auf, die insbesondere geringer ist als die erste Querschnittsfläche. Insbesondere weist der Kühlkanal in dem ersten verschleißfreien oder verschleißarmen Bereich eine erste Querschnittsfläche mit einem ersten Umfang auf und in dem zweiten Verschleißbereich eine zweite Querschnittsfläche mit einem zweiten Umfang auf, wobei die zweite Querschnittsfläche geringer ist als die erste Querschnittsfläche und wobei der zweite Umfang geringer ist als der erste Umfang. Somit erfolgt in dem ersten Bereich eine besonders optimierte Kühlung des Bauteils, da der Kühlkanal und dementsprechend das Kühlmittel zum einen besonders nah an der zu kühlenden Mantelfläche des Bauteils verlaufen und zum anderen aufgrund der vergrößerten ersten Querschnittsfläche mehr Kühlmittel im ersten Bereich vorhanden ist. Bei der oben beschriebenen Ausführungsform bedeutet eine vergrößerte Querschnittsfläche auch einen erhöhten Umfang und somit eine Erhöhung der vom Kühlmittel angeströmten Fläche, wodurch die Kühlung des Bauteils verbessert wird. Alternativ können Ausführungsformen vorgesehen sein, die derart ausgebildet sind, dass bereichsweise eine geringere Querschnittsfläche mit einem vergrößerten Umfang ausgebildet ist, so dass in dem entsprechenden Bereich die vom Kühlmittel angeströmten Flächen ebenfalls vergrößert sind.

Eine alternative Ausführungsform kann vorsehen, dass der Kühlkanal über seine gesamte Länge eine weitgehend konstante Querschnittsfläche aufweist. In diesem Fall ist insbesondere vorgesehen, dass der Kühlkanal abschnittsweise in entsprechende Entfernung zur zu kühlenden Mantelfläche angeordnet und/oder ausgebildet ist, so dass jeweils die oben beschriebenen unterschiedlichen Wandstärken zwischen dem Hohlraum und der Mantelfläche des Grundkörpers ausgebildet sind. Zwischen den Kühlabschnitten sind entsprechende Verbindungsabschnitte angeordnet, die die Kühlabschnitte mit den unterschiedlichen Wandstärken miteinander verbinden.

Zur Stabilisierung des Hohlraums, insbesondere des Kühlkanals, können innerhalb des Hohlraums zumindest bereichsweise Stützstrukturen angeordnet und/oder ausgebildet sein. Besonders bevorzugt sind zumindest im ersten verschleißarmen oder verschleißfreien Bereich Stützstrukturen ausgebildet, die sich vorzugsweise von einer Innenmantelfläche des Hohlraums zu einer weiteren Innenmantelfläche des Hohlraums erstrecken, insbesondere zu einer gegenüberliegenden Innenmantelfläche.

Alternativ oder zusätzlich können Stützstrukturen insbesondere in Bereichen verwendet werden, in denen schwellende Biegekräfte und Torsionskräfte auf das Bauteil wirken. Beispielsweise gibt es bei einer Rührwelle einer Rührwerkskugelmühle jeweils Teilbereiche, in denen der Verschleiß zwar gering ist, da sich in diesen Teilbereichen betriebsbedingt die Mahlkörper nicht so stark an der Oberfläche reiben, bzw. auf diese einhämmern. Diese Teilbereiche können jedoch hohen Belastungen ausgesetzt sein. Bei den Belastungen kann es sich beispielsweise um Biege- und/oder Torsionsbelastungen handeln. Um diesen entgegen zu wirken, können die Teilbereiche zusätzlich durch innerhalb der Hohlräume ausgebildete Stützstrukturen verstärkt werden.

Gemäß einer Ausführungsform sind im ersten verschleißarmen oder verschleißfreien Bereich erste Stützstrukturen ausgebildet und im zweiten Verschleißbereich sind zweite Stützstrukturen ausgebildet. Die ersten Stützstrukturen und die zweiten Stützstrukturen können identisch oder im Wesentlichen gleich ausgebildet sein, wobei im Falle einer vergrößerten Querschnittsfläche im ersten Bereich die ersten Stützstrukturen entsprechend länger ausgebildet sind. Eine weitere Ausführungsform kann vorsehen, dass die Anzahl an ersten Stützstrukturen im ersten Bereich höher ist als die Anzahl an zweiten Stützstrukturen im Verschleißbereich, da aufgrund der erhöhten Wandstärke im zweiten Bereich zumindest anfänglich gegebenenfalls kein oder kaum Stützbedarf besteht. Alternativ oder zusätzlich kann sich die Form und/oder Stabilität der ersten Stützstrukturen von der Form und Stabilität der zweiten Stützstrukturen je nach Bedarf und Anwendungsfall unterscheiden oder aber gleichen. Die Stützstrukturen können sich im Wesentlichen linear durch den Hohlraum erstrecken oder auch eine nicht-lineare Form aufweisen, beispielsweise können die Stützstrukturen Verzweigungen aufweisen, eine wabenförmige Struktur aufweisen o.ä. Die Anzahl und/oder die Form der Stützstrukturen kann dabei vermittels FEM- Berechnungen ermittelt und/oder optimiert werden, insbesondere kann die Anzahl und/oder Form der Stützstrukturen für jeden Verschleißbereich gesondert ermittelt und/oder optimiert werden.

Vorzugsweise wird die Anzahl und/oder die Form der ersten Stützstrukturen und/oder der zweiten Stützstrukturen dahingehend optimiert, dass die Temperierung des Bauteils optimiert wird, insbesondere durch eine geeignete Strömungsführung des Temperiermittels innerhalb des mindestens einen Hohlraums.

Durch die Verwendung von inneren Stützstrukturen kann die Wandstärke insbesondere in den ersten verschleißarmen oder verschleißfreien Bereichen weiter reduziert werden, wodurch insbesondere die Wärmeübertragung des Temperiermittels und somit die Temperierung des Bauteils optimiert wird, insbesondere die Kühlung des Bauteils. Zudem wird durch die Stützstrukturen die durch das Temperiermittel angeströmte Oberfläche erhöht, was sich ebenfalls positiv auf die Temperierung des Bauteils auswirkt. Zudem stellen die Stützstrukturen Hindernisse für den Temperiermittelstrom dar und führen zu turbulenten Strömungen des Temperiermittels innerhalb des Temperierkanals. Insbesondere bewegt sich das Kühlmittel in herkömmlich bekannten Kühlkanälen vorwiegend in einer laminaren Strömung. Eine laminare Strömung steht an der Innenwandfläche und bildet eine Isolierschicht zum kalten vorbeiströmenden Kühlmedium. Durch die Stützstrukturen entstehen Verwirbelungen, wodurch der Kühlmittelstrom in eine turbulente Strömung gebracht wird, was eine verbesserte Kühlung der Innenoberfläche bewirkt und die Temperierung weiter verbessert.

Gemäß einer weiteren Ausführungsform kann mindestens ein dritter Bereich vorgesehen sein, bei welchen konstruktive Elemente in die den Hohlraum umschließende Wand integriert sind. Beispielsweise ist vorgesehen, dass in dem zwischen einer Innenmantelfläche des Hohlraums und einer Mantelfläche des Grundkörpers des Bauteils eine dritte Wandstärke ausgebildet ist. Die dritte Wandstärke ist größer als die erste Wandstärke. Die dritte Wandstärke kann beispielsweise im Wesentlichen der zweiten Wandstärke entsprechen. Weitere Ausführungsformen können vorsehen, dass die dritte Wandstärke größer als die zweite Wandstärke ist. Eine alternative Ausführungsform kann dagegen vorsehen, dass die dritte Wandstärke größer als die erste Wandstärke, aber geringer als die zweite Wandstärke ausgebildet ist.

Bei dem dritten Bereich kann es sich im einen Verschleißbereich handeln. In der Regel handelt es sich bei dem dritten Bereich aber eher um einen verschleißarmen Bereich. Insbesondere ist in dem dritten Bereich die Befestigung weiterer Komponenten an dem Bauteil vorgesehen. Der dritte Bereich wird deshalb nachfolgend auch als Befestigungsbereich bezeichnet. Beispielsweise kann vorgesehen sein, dass in dem Befestigungsbereich eine Gewindebohrung in das Bauteil eingebracht wird, um die weitere Komponente oder um mindestens ein weiteres konstruktives Element vermittels einer Schraubverbindung an dem Bauteil anzuordnen. Die dritte Wandstärke ist dabei derart gewählt, dass sie höher ist als die Länge der Gewindebohrung, so dass die Schraubverbindung nicht in den Hohlraum hineinragt und somit eine undichte Stelle erzeugt, über die bei ungenügender Abdichtung Temperiermittel aus dem Hohlraum austreten könnte.

Aufgrund der erhöhten dritten Wandstärke kann die Querschnittsfläche in dem dritten Bereich gegenüber der Querschnittsfläche im ersten und/oder im zweiten Bereich reduziert sein. Vorzugsweise weist die Querschnittsfläche Einstülpungen, eine gefaltete Struktur o.ä. auf, so dass der Umfang der Querschnittsfläche gleich oder sogar erhöht gegenüber einem Umfang der Querschnittsfläche im ersten und/oder im zweiten Bereich ist. Ein vergrößerter Umfang führt zu einer Erhöhung der vom Kühlmittel angeströmten Fläche, wodurch die Kühlung des Bauteils im dritten Bereich verbessert wird. Entscheidend ist die Wirkfläche gegenüber dem Mahlraum, insbesondere gegenüber der Mahlzone im Mahlraum, die sich zwischen dem Rotor und Innenwand des Behälters befindet, da hier die größte Wärmeentwicklung herrscht.

Bei dem temperierten Bauteil handelt es sich vorzugsweise um ein Bauteil einer Rührwerkskugelmühle oder einer Kugelmühle, insbesondere um eine Rührwelle oder um eine Mahlscheibe oder um eine Verschleißscheibe an einer Mahlraumwandung der Rührwerkskugelmühle oder Kugelmühle oder um einen Mahlbehälter der Rührwerkskugelmühle oder Kugelmühle.

Vorzugsweise wird das Bauteil vermittels 3D- Druck hergestellt. Besonders bevorzugt ist vorgesehen, das Bauteil einstückig herzustellen. Vermittels des 3D-Druck- Verfahrens kann das Bauteil mit den internen Temperierstrukturen, deren Querschnittsfläche sich über die Länge der Temperierstrukturen verändert und/oder deren Verlauf über die Länge der Temperierstrukturen nicht linear ausgebildet ist, einfach und kostengünstig in einem einzigen Verfahrensschritt hergestellt werden. Dadurch werden die Produktionskosten gegenüber herkömmlichen Verfahren wie beispielsweise Spritzgießen o.ä. deutlich reduziert. Insbesondere, da die herkömmlichen Verfahren eine Nachbearbeitung erfordern. Beispielsweise können Temperierkanäle nur durch ein nachträgliches Einbringen von Bohrungen erzeugt werden. Zudem ist der Formenschatz der dadurch herstellbaren Temperierkanäle begrenzt und die Ausbildung interner Stützstrukturen ist auch nicht einfach möglich.

Besonders bevorzugt wird das Bauteil vermittels 3D- Druck aus einem metallischen Werkstoff hergestellt. Gegebenenfalls kann vorgesehen werden, dass Bauteil im Anschluss an den 3D-Druck zusätzlich zu härten, beispielsweise durch Umwandlungshärtung, durch Ausscheidungshärtung oder durch Kalthärtung, um die Festigkeit und Stabilität des Bauteils zu erhöhen.

Gemäß einer Ausführungsform wird das Bauteil vermittels 3D- Druck aus einem keramischen Material hergestellt, beispielsweise aus Siliziumcarbid (SiC), aus Siliziumcarbid mit freiem Silizium (SiSiC), aus Siliziumnitrid, aus Zirkonoxid oder aus Mischkeramiken. Weiterhin wäre die Verwendung von wärmeleitfähigen Kunststoffen möglich. Auch könnte ein 3D-Druck mit mindestens zwei unterschiedlichen Materialien derart erfolgen, dass das Bauteil im Wesentlichen aus einem ersten Material besteht, wobei die Innenmantelflächen und/oder Außenmantelflächen des Bauteils zumindest bereichsweise beispielsweise aus einem zweiten Material bestehen oder von einem zweiten Material überzogen sind. Beispielsweise könnte das Bauteil im Wesentlichen aus einem Metall, insbesondere Stahl, bestehen, wobei die Innenmantelflächen und/oder Außenmantelflächen des Bauteils zumindest bereichsweise beispielsweise von einer Kunststoffschicht, beispielsweise Polyurethan überzogen ist.

Es sei an dieser Stelle ausdrücklich erwähnt, dass alle Aspekte und Ausführungsvarianten, die im Zusammenhang mit der erfindungsgemäßen Vorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Vorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Vorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Vorrichtung.

### Figurenbeschreibung

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Längsschnitt-Darstellung einer Rührwelle.
Figur 2 zeigt eine Schnittdarstellung entlang der Schnittlinie A-A der Rührwelle aus Figur 1.
Figur 3 zeigt eine Schnittdarstellung entlang der Schnittlinie B-B der Rührwelle aus Figur 1.
Figur 4 zeigt eine Schnittdarstellung einer zweiten Ausführungsform einer Rührwelle gemäß Figur 1 entlang der Schnittlinie A-A.
Figur 5 zeigt eine Schnittdarstellung einer dritten Ausführungsform einer Rührwelle gemäß Figur 1 entlang der Schnittlinie A-A.
Figur 6 zeigt eine Schnittdarstellung der dritten Ausführungsform einer Rührwelle gemäß Figur 1 entlang der Schnittlinie B-B.
Figur 7 zeigt eine alternative Ausführungsform einer Rührwelle.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

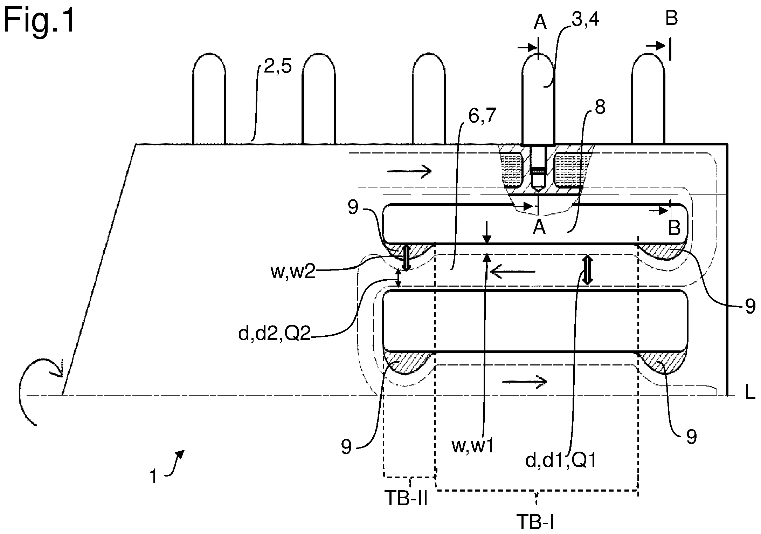

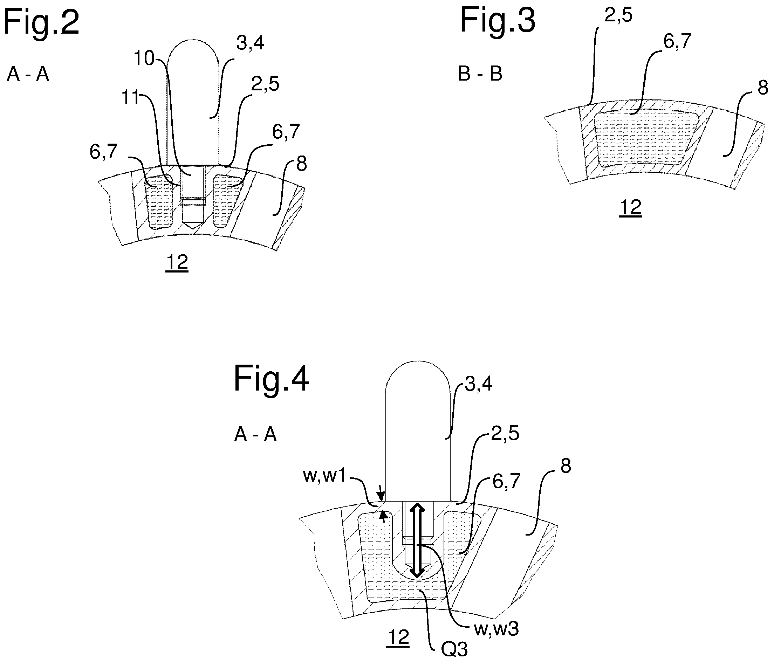

Figur 1 zeigt eine schematische Längsschnitt-Darstellung eines temperierten Bauteils in Form einer Rührwelle 1, wie sie insbesondere als Rührwerk in einer Rührwerkskugelmühle verwendet wird. Figur 2 zeigt eine Schnittdarstellung entlang der Schnittlinie A-A der Rührwelle aus Figur 1 und Figur 3 zeigt eine Schnittdarstellung entlang der Schnittlinie B-B der Rührwelle aus Figur 1.

Eine Rührwerkskugelmühle besteht aus einem vertikal oder horizontal angeordneten, meist annähernd zylindrischen Mahlbehälter, der zu 70% bis 90 % mit Mahlhilfskörpern gefüllt ist. Das zu vermahlende Produkt strömt beim Mahlvorgang kontinuierlich von einem Produkteinlass axial durch den Mahlraum bis zu einem Produktauslass. Dabei werden die suspendierten Feststoffe durch Prall- und Scherkräfte zwischen den Mahlhilfskörpern zerkleinert bzw. dispergiert. In einem Auslassbereich erfolgt dann die Trennung der Mahlhilfskörper vom Produktstrom. Der Austrag ist von der Bauform abhängig und erfolgt beispielsweise durch ein Sieb am Mühlenende.

Das Rührwerk wird durch die Rührwelle 1 gebildet, die dazu dient, die Rührelemente 3, die alternativ auch in Form von Scheiben oder dergleichen ausgebildet sein können, zu drehen. Dabei werden die in Flüssigkeit verteilten Feststoffe des Mahlgutes deagglomeriert und zerkleinert.

Die Rührwelle 1 weist einen zylindrischen Grundkörper 2 mit einer Längsachse L und einer Außenmantelfläche 5 auf, wobei auf der Außenmantelfläche 5 des zylindrischen Grundkörpers 2 Rührelemente 3, insbesondere Rührstäbe 4, angeordnet sind. Die Außenflächen der Rührstäbe 4 und die nicht durch Rührstäbe 4 bedeckten Bereiche der Außenmantelfläche 5 des zylindrischen Grundkörpers 2 bilden zusammen eine Außenmantelfläche der Rührwelle 1. Die Rührelemente 3 sind in mehreren Reihen, insbesondere jeweils in fluchtender Anordnung, an der Außenmantelfläche 5 des zylindrischen Grundkörpers 2 angeordnet, wobei die Reihen vorzugsweise parallel zur Längsachse L der Rührwelle 1 angeordnet und/oder ausgebildet sind. Alternativ können die Rührelemente 3 auch versetzt zueinander an der Außenmantelfläche 5 des zylindrischen Grundkörpers 2 angeordnet sein. Gemäß einer weiteren Ausführungsform ist vorgesehen, dass die Rührelemente 3 in helikaler Anordnung um die Längsachse L der Rührwelle 1 herumwindend an der Außenmantelfläche 5 des zylindrischen Grundkörpers 2 angeordnet sind.

Vorzugsweise ist vorgesehen, dass die Rührwelle 1 einstückig ausgebildet ist und beispielsweise aus einem Metallwerkstoff oder einem Keramikmaterial oder einem anderen geeigneten Material besteht. Besonders bevorzugt wird die Rührwelle 1, insbesondere der Grundkörper 2 gemeinsam mit den Rührelementen 3, durch einen einzigen Verfahrensschritt aus dem entsprechenden Material hergestellt. Besonders bevorzugt wird hierzu ein 3D- Druckverfahren verwendet, da mit diesem Verfahren in einem einzigen Verfahrensschritt auch Hohlräume 6 innerhalb des Grundkörpers 2 der Rührwelle 1 erzeugt werden können.

Die Rührwelle 1 ist vorzugsweise zumindest bereichsweise hohl ausgebildet, vorzugsweise weist die Rührwelle 1 einen koaxialen hohlen Innenraumbereich 12 (vergleiche Figuren 2 und 3) auf. Weiterhin weist die Rührwelle 1 zumindest bereichsweise Durchtrittsöffnungen 8 zwischen dem hohlen Innenraumbereich 12 und der Außenmantelfläche 5 des zylindrischen Grundkörpers 2 der Rührwelle 1 auf. Innerhalb des hohlen Innenraumbereichs 12 ist eine Trennvorrichtung und der Produktauslass angeordnet. Durch die Trennvorrichtung werden die Mahlhilfskörper von dem vermahlenen Produkt abgetrennt. Während das zerkleinerte Produkt über den Produktauslass abgeführt werden kann, werden die Mahlhilfskörper und gegebenenfalls noch nicht ausreichend zerkleinertes Mahlgut über die Durchtrittsöffnungen 8 wieder in eine Mahlzone innerhalb des Mahlraums der Rührwerkskugelmühle zurückgeführt, welcher sich zwischen der Außenmantelfläche 5 des zylindrischen Grundkörpers 2 der Rührwelle 1 und der Innenmantelfläche des Mahlbehälters der Rührwerkskugelmühle befindet.

Weiterhin weist die Rührwelle 1 zwischen dem hohlen Innenraumbereich 12 und der Außenmantelfläche 5 des zylindrischen Grundkörpers 2 weitere Hohlräume 6 zur Temperierung der Rührwelle 1 auf, insbesondere zur Kühlung der Rührwelle 1. Die Kühlung ist notwendig, da bei dem Zerkleinerungsvorgang Prozesswärme entsteht, welche den Prozessablauf selbst beziehungsweise die eingesetzten Ausgangsstoffe negativ beeinflussen kann, weil beispielsweise die am Prozess beteiligten Stoffe temperaturempfindlich sind oder die Temperaturänderung sich auf die Prozessgeschwindigkeit auswirkt und damit eine geordnete Prozessführung erschwert. In Abhängigkeit vom Produkt muss diese Wärme abgeführt werden bzw. es muss eine Wärmebildung verhindert werden. Die abzuführende Wärmemenge ist insbesondere bei Rührwerkskugelmühlen mit einem großen Mahlvolumen oder bei hohem Leistungseintrag entsprechend hoch.

Durch Kühlung der Rührwelle 1 wird der Prozessablauf stabilisiert. Die Kühlung der Rührwelle 1 wird dadurch bewirkt, dass ein Kühlmittel in den mindestens einen Hohlraum 6 der Rührwelle 1 eingeleitet wird oder dass ein Kühlmittel durch den mindestens einen Hohlraum 6 der Rührwelle 1 durchgeleitet wird. Das Kühlmittel nimmt dabei Wärme auf und führt diese ab. Der mindestens eine Hohlraum 6 ist vorzugsweise als Kühlkanal 7 ausgebildet, der sich parallel zur Längsachse L der Rührwelle 1 erstreckt. Gemäß der dargestellten Ausführungsform ist vorgesehen, dass sich Kühlkanäle 7 insbesondere parallel zur Längsachse L der Rührwelle und parallel zu den sich parallelaxial erstreckenden Durchtrittsöffnungen 8 erstrecken.

Die Rührwelle 1 einer Rührwerkskugelmühle oder Kugelmühle ist durch den Kontakt mit dem Mahlgut und den Mahlhilfskörpern einem permanenten Verschleiß ausgesetzt. Dabei gibt es (Teil)Bereiche TB-II, in denen der Verschleiß besonders hoch ist, beispielsweise (Teil)Bereiche TB-II zwischen den Rührelementen 3, an denen Verwirbelungen des Mahlhilfskörper-Mahlgut-Gemisches stattfinden, so dass dieses mit erhöhter Geschwindigkeit auf die Rührwelle 1 auftrifft und/oder so dass die Kontakthäufigkeit mit der Rührwelle 1 erhöht ist.

Besondere verschleißanfällige Bereiche TB-II befinden sich beispielsweise an den Randbereichen der Durchtrittsöffnungen 8. Die Verschleißbereiche 9 sind im vorliegenden Beispiel durch eine Schraffur gekennzeichnet. Bei der hier beschriebenen Erfindung ist vorgesehen, dass die Rührwelle 1 dahingehend optimiert ist, dass in Bereichen TB-II, in denen ein erhöhter Verschleiß vorliegt, bei der Herstellung der Rührwelle 1 eine höhere Wandstärke w2 zwischen dem Hohlraum und der Außenmantelfläche 5 des zylindrischen Grundkörpers 2 der Rührwelle 1 ausgebildet ist, so dass mehr Material vorhanden ist, welches durch den Verschleiß abgetragen werden kann. Durch die teilweise erhöhte Wandstärke w2 wird die Lebensdauer der Rührwelle 1 erhöht, d.h. die Rührwelle 1 muss weniger oft ersetzt werden. Gleichzeitig kann eine Wandstärke w in (Teil)Bereichen TB-I, in denen kein oder nur geringfügig Verschleiß stattfindet, möglichst dünn ausgestaltet werden, um somit die Wärmeübertragung von der Außenmantelfläche 5 der Rührwelle 1 auf das Kühlmittel zu optimieren.

Gemäß einer Ausführungsform weist der Kühlkanal 7 bereichsweise unterschiedliche Innendurchmesser d auf. Daraus ergibt sich, dass der Kühlkanal 7 somit bereichsweise unterschiedliche ausgebildete und insbesondere unterschiedliche große Querschnittsflächen Q aufweist. Es ist vorgesehen, dass der Kühlkanal 7 in einem ersten (Teil)Bereich TB-I einen ersten Durchmesser d1 aufweist, so dass zwischen einer Innenmantelfläche des Kühlkanals 7 und der Durchtrittsöffnung 8 eine erste Wandstärke w1 ausgebildet ist. Aufgrund des ersten Durchmessers d1 ergibt sich eine erste Querschnittsfläche Q1 des Kühlkanals. Weiterhin ist vorgesehen, dass der Kühlkanal 7 in einem zweiten (Teil)Bereich TB-II, der insbesondere dem Verschleißbereich 9 entspricht, einen zweiten Durchmesser d2 und daraus resultierend eine zweite Querschnittsfläche Q2 aufweist, so dass zwischen einer Innenmantelfläche des Kühlkanals 7 und der Durchtrittsöffnung 8 eine zweite Wandstärke w2 ausgebildet ist. Insbesondere ist die erste Querschnittsfläche Q1 größer als die zweite Querschnittsfläche Q2 und die zweite Wandstärke w2 ist zumindest anfänglich höher als die erste Wandstärke w1. Somit weist die Rührwelle 1 zumindest vor der ersten Verwendung in den Verschleißbereichen 9 eine erhöhte Wandstärke w2 auf. Durch die Verwendung der Rührwelle 1 ist diese den normalen Abnutzungsvorgängen ausgesetzt. Durch den Verschleiß wird in den entsprechenden Verschleißbereichen 9 das Material, aus dem die Rührwelle 1 besteht nach und nach abgetragen, so dass die Wandstärke w in den Verschleißbereichen 9 mit zunehmender Benutzungsdauer abnimmt. Dabei unterliegen die Wandbereiche w1 in den (Teil)Bereichen TB-I einem geringeren Verschleiß als die Wandbereiche w2 in den (Teil)Bereichen TB-II.

Da in den Verschleißbereichen 9 im Vergleich zu den ersten (Teil)Bereichen TB-I mit geringem bzw. mit reduziertem Verschleiß eine zumindest anfänglich erhöhte zweite Wandstärke w2 an Material bereitgestellt wird, weist die Rührwelle 1 eine höhere Lebensdauer auf als eine Rührwelle, bei der die anfängliche Wandstärke w zwischen Kühlkanal 7 und Außenmantelfläche 5 des zylindrischen Grundkörpers 2 der Rührwelle überall gleich stark ausgebildet ist. Optional kann zusätzlich die Wandstärke w1 in den ersten (Teil)Bereichen, in denen nur ein geringer Verschleiß stattfindet, weiter reduziert werden und insbesondere sehr dünn ausgestaltet werden, wodurch die Kühlwirkung der Rührwelle 1 erhöht und optimiert werden kann.

Insbesondere sind gemäß einer Ausführungsform die Kühlkanäle 7 insbesondere in Teilbereichen erweitert, in denen wenig oder kein Verschleiß, insbesondere wenig oder kein Materialabrieb, an der Rührwelle 1 zu erwarten sind, so dass in diesen Teilbereichen besonders geringe, optimierte Wandstärken w1 verwendet werden können. Die Wandstärke w wirkt sich direkt auf die Wärmeübertragung auf das Kühlmittel in den Kühlkanälen 7 aus. Je größer die Wandstärke w, desto geringer ist die Wärmeübertragung in das Kühlmittel. Somit sind geringe Wandstärken w zwischen Kühlkanal 7 und Außenmantelfläche der Rührwelle 1 zu bevorzugen.

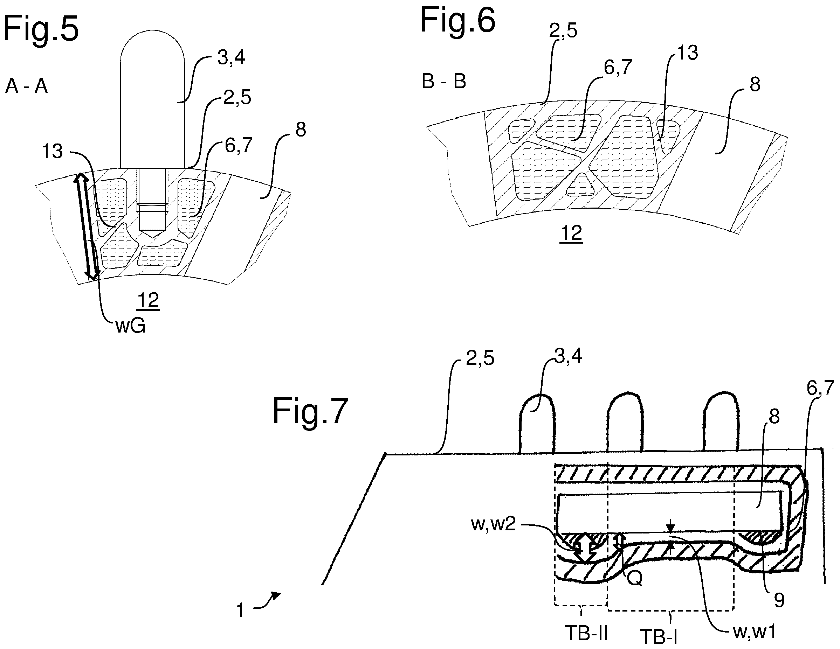

(Teil)Bereiche TB-I, in denen der Verschleiß gering ist, da sich in diesen (Teil)Bereichen TB-I betriebsbedingt die Mahlkörper nicht so stark an der Oberfläche reiben, bzw. auf diese einhämmern, können jedoch auch hohen Belastungen ausgesetzt sein. Bei den Belastungen kann es sich beispielsweise um Biege- und/oder Torsionsbelastungen handeln. Um diesen Belastungen auch oder gerade im Zusammenhang mit geringen Wandstärken w Stand halten zu können, können solche (Teil)Bereiche TB-I zusätzlich durch innenliegenden Stützstrukturen verstärkt werden. Bei den verstärkenden Strukturen kann es sich beispielsweise um Stützstrukturen 13 innerhalb der Kühlkanäle 7 handeln, wie sie im Zusammenhang mit den Figuren 5 und 6 nachfolgend beschrieben werden.

Der Kühlkanal 7 kann auch eine andere Form aufweisen, insbesondere eine nicht lineare Form. Der Kühlkanal 7 kann beispielsweise mäanderförmig oder spiralförmig ausgebildet sein. Auch solcherart gestaltete Kühlkanäle können entlang von verschleißintensiven (Teil)Bereichen TB-I und verschleißarmen (Teil)Bereichen TB-II verlaufen. Die Ausgestaltung mit unterschiedliche dicken Wandbereichen gemäß obiger Beschreibung ist auch bei diesen Kühlkanälen vorteilhaft anwendbar. Entsprechende Ausführungsformen sind aufgrund der Offenbarung in vorliegender Beschreibung für den Fachmann naheliegend und sind vom Schutzbereich der nachfolgenden Patentansprüche mit umfasst.

Bei der hier dargestellten Rührwelle 1 sind die Rührelemente 3 als Rührstäbe 4 ausgebildet und über eine Schraubverbindung 10 am Grundkörper 2 befestigt. Insbesondere sind hierfür Gewindebohrungen 11 in den Grundkörper 2 eingebracht. Herkömmlicherweise ist im Befestigungsbereich keine Kühlung der Rührwelle 1 vorgesehen. Gemäß der nachfolgend dargestellten Ausführungsform ist die Gewindebohrung 11 vom Kühlkanal 7 umschlossen.

Figur 4 zeigt eine Schnittdarstellung einer zweiten Ausführungsform einer Rührwelle gemäß Figur 1 entlang der Schnittlinie A-A. Hierbei ist vorgesehen, dass der Befestigungsbereich für die Rührelemente 3 einen dritten (Teil)Bereich, in dem zwischen dem Kühlkanal 7 und der Oberfläche des zylindrischen Grundkörpers 2 eine dritte Wandstärke w3 ausgebildet ist, die insbesondere größer ist als die erste Wandstärke w1 und gegebenenfalls auch größer ist als die im Zusammenhang mit Figur 1 beschriebene zweite Wandstärke w2. Die Befestigung des Rührelementes 3 ist somit in die den Hohlraum 6 oder Kühlkanal 7 umschließende Wand integriert, die eine entsprechende erhöhte dritte Wandstärke w3 aufweisen muss.

Beispielsweise kann vorgesehen sein, dass in dem Befestigungsbereich eine Gewindebohrung 11 in die Rührwelle eingebracht wird, um das Rührelement 3 vermittels einer Schraubverbindung 10 an der Rührwelle anzuordnen. Die dritte Wandstärke w3 ist dabei derart gewählt, dass sie höher ist als die Länge der Gewindebohrung 11, so dass die Schraubverbindung 10 nicht in den Hohlraum hineinragt und somit eine undichte Stelle erzeugt, über die bei ungenügender Abdichtung Temperiermittel aus dem Hohlraum 6 austreten könnte. Im Bereich der erhöhten Wandstärke weist der Kühlkanal eine reduzierte dritte Querschnittsfläche Q3 auf.

Obwohl die dritte Querschnittsfläche Q3 geringer ist, weist der Kühlkanal 7 im Bereich der dritten Querschnittsfläche Q3 einen erhöhten Umfang auf. Der erhöhte Umfang bewirkt eine vergrößerte vom Kühlmittel angeströmte Fläche, wodurch die Kühlung des Bauteils in diesem dritten Bereich verbessert wird. Entscheidend ist die Wirkfläche gegenüber dem Mahlraum, insbesondere gegenüber der Mahlzone im Mahlraum, die sich zwischen der Rührwelle und der Innenwand des Mahlbehälters befindet, da hier die größte Wärmeentwicklung herrscht.

Figur 5 zeigt eine Schnittdarstellung einer dritten Ausführungsform einer Rührwelle 1 gemäß Figur 1 entlang der Schnittlinie A-A und Figur 6 zeigt eine Schnittdarstellung der dritten Ausführungsform einer Rührwelle 1 gemäß Figur 1 entlang der Schnittlinie B-B.

Insbesondere ist ein Querschnitt durch eine als Hohlwelle ausgebildete Rührwelle 1 mit einem hohlen Innenraumbereich 12 dargestellt. Die Rührwelle 1 weist zwischen dem hohlen Innenraumbereich 12 und der Außenmantelfläche 5 eine Gesamt- Wandstärke wG auf. Die zumindest bereichsweise als Hohlwelle ausgebildete Rührwelle ist nicht aus einem Vollmaterial gebildet, sondern durch mindestens einen Hohlraum 6 durchzogen, beispielsweise einem Kühlkanal 7. Innerhalb des Hohlraums 6 sind zumindest bereichsweise Stützstrukturen 13 angeordnet und/oder ausgebildet. Die Stützstrukturen 13 dienen insbesondere der Stabilisierung der Rührwelle 1 im Bereich verringerter Wandstärken w, w1. Insbesondere ermöglicht die Verwendung von Stützstrukturen 13 die Ausbildung besonders geringer Wandstärken w1, wodurch die Wärmeübertragung in das Kühlmittel optimiert ist. Zudem wird durch die Stützstrukturen 13 die durch das Kühlwasser angeströmte Oberfläche erhöht, wodurch die Kühlung der Rührwelle 1 weiter verbessert werden kann. Weiterhin werden durch die Stützstrukturen 13 turbulente Strömungen innerhalb des Kühlkanals 7 erzeugt. Im Gegensatz zu Kühlkanälen, die durch Bohrungen mit einem einheitlichen Durchmesser entlang ihrer Länge ausgebildet sind und in denen nur laminare Strömungen auftreten, wird durch die Stützstrukturen 13 das Auftreten von Verwirbelungen und turbulenten Strömungen bewirkt und somit die Kühlung weiter verbessert. Die Stützstrukturen 13 können sich beispielsweise radial zur Längsachse L der Rührwelle 1 erstrecken. Alternativ kann vorgesehen sein, dass die Stützstrukturen eine wabenähnliche Struktur aufweisen o.ä.

Die im Zusammenhang mit den Figuren 1 bis 6 beschriebenen Kühlkanäle 7 sind insbesondere an einen zu erwartenden Verschleiß des Bauteils angepasst. In den Bereichen TB-II, in denen ein hoher Verschleiß zu erwarten ist, wird bei der Herstellung des Bauteils eine erhöhte Wandstärke w2 zwischen dem Hohlraum 6 oder Kühlkanal 7 und einer Mantelfläche des Bauteils ausgebildet, insbesondere zwischen der Außenmantelfläche 5 des Grundkörpers 2 des Bauteils. Dementsprechend ist der Hohlraum 6 oder Kühlkanal 7 in diesem Verschleißbereich 9, TB-II verengt ausgebildet. Dagegen werden in Bereichen TB-I, in denen nur ein geringer (normaler) Verschleiß zu erwarten ist, besonders dünne Wandstärken w1 zwischen dem Hohlraum 6 oder Kühlkanal 7 und der Außenmantelfläche 5 des Bauteils oder des Grundkörpers 2 des Bauteils ausgebildet, um die Temperierung zu optimieren. Insbesondere ist der Hohlraum 6 oder Kühlkanal 7 in dem verschleißarmen oder weitgehend verschleißfreien Bereich TB-I erweitert.

Eine alternative Ausführungsform gemäß Figur 7 kann vorsehen, dass der Hohlraum 6 oder Kühlkanal 7 entlang seiner Länge immer eine weitgehend identische Querschnittsfläche Q ausgebildet hat. Der Kühlkanal 7 ist in diesem Fall jedoch nicht linear ausgebildet. Stattdessen weist der Kühlkanal 7 eine gewundene Form auf, so dass der Kühlkanal 7 in den verschleißarmen oder weitgehend verschleißfreien (Teil)Bereichen TB-I besonders nah an der entsprechenden Außenmantelfläche 5 des Bauteils verläuft, so dass nur eine geringe Wandstärke w1 ausgebildet ist. Stattdessen weist der Kühlkanal 7 in den Verschleißbereichen 9, TB-II zuerst einen größeren Abstand zur entsprechenden Außenmantelfläche 5 des Bauteils aufweist, so dass eine größere Wandstärke w2 ausgebildet ist. Durch die Verschleißerscheinungen im laufenden Produktionsbetrieb wird Material des Bauteils in den Verschleißbereichen 9, TB-II abgetragen, so dass die Wandstärke w in diesen Bereichen 9, TB-II abnimmt. Wenn die Wandstärke w in diesen Bereichen 9, TB-II zu gering wird, insbesondere wenn die Wandstärke w in diesen Bereichen auf einen Wert unterhalb der Wandstärke w1 sinkt, dann muss die Rührwelle 1 ausgetauscht werden.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Wenn auch im Zusammenhang der Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen der Stückgüter und/oder Teilen der Vorrichtung oder anderer gezeichneter Elemente in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Vorrichtung ein besseres Verständnis für den in den Ansprüchen sowie im allgemeinen Teil der Beschreibung allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezuaszeichenliste

- 1: Rührwelle
- 2: (zylindrischer) Grundkörper
- 3: Rührelement
- 4: Rührstab
- 5: Außenmantelfläche
- 6: Hohlraum
- 7: Kühlkanal
- 8: Durchtrittsöffnung
- 9: Verschleißbereich
- 10: Schraubverbindung
- 11: Gewindebohrung
- 12: hohler Innenraumbereich
- 13: Stützstruktur

- d: Durchmesser
- d1: erste Durchmesser
- d2: zweite Durchmesser
- L: Längsachse
- Q: Querschnittsfläche
- Q1: erste Querschnittsfläche
- Q2: zweite Querschnittsfläche
- Q3: dritte Querschnittsfläche
- TB-I: erster (Teil)Bereich
- TB-II: zweiter (Teil)Bereich
- w: Wandstärke
- wG: Gesamt-Wandstärke
- w1: erste Wandstärke
- w2: zweite Wandstärke
- w3: dritte Wandstärke

## Patentansprüche

1. Temperiertes Bauteil (1) umfassend einen Grundkörper (2) mit mindestens einem mit einem Temperiermittel durchströmbaren Hohlraum (6),
a. wobei in einem ersten Bereich (TB-I) zwischen einer Innenmantelfläche des Hohlraums (6) und einer Mantelfläche (5) des Grundkörpers (2) eine erste Wandstärke (w1) ausgebildet ist,
b. wobei in einem zweiten Bereich (TB-II) zwischen einer Innenmantelfläche des Hohlraums (6) und einer Mantelfläche (5) des Grundkörpers (2) eine zweite Wandstärke (w2) ausgebildet ist,
c. wobei der zweite Bereich (TB-II) ein Verschleißbereich (9) ist und wobei die zweite Wandstärke (w2) größer ist als die erste Wandstärke (w1).

2. Temperiertes Bauteil (1) nach Anspruch 1, wobei der mit einem Temperiermittel durchströmbare Hohlraum (6) ein Temperierkanal (7) ist, insbesondere ein Kühlkanal, wobei der Temperierkanal (7) im ersten Bereich (TB-I) eine erste Querschnittsfläche (Q1) aufweist und wobei der Temperierkanal (7) im zweiten Bereich (TB-II) eine zweite Querschnittsfläche (Q2) aufweist, wobei die zweite Querschnittsfläche (Q2) geringer ist als die erste Querschnittsfläche (Q1).

3. Temperiertes Bauteil (1) nach Anspruch 1 oder 2, wobei innerhalb des Hohlraums (6) zumindest bereichsweise Stützstrukturen (13) angeordnet und/oder ausgebildet sind.

4. Temperiertes Bauteil (1) nach einem der Ansprüche 1 bis 3, wobei im ersten Bereich (TB-I) erste Stützstrukturen ausgebildet sind und/oder wobei im zweiten Bereich (TB-II) zweite Stützstrukturen ausgebildet sind.

5. Temperiertes Bauteil (1) nach einem der voranstehenden Ansprüche, wobei in einem dritten Bereich zwischen einer Innenmantelfläche des Hohlraums (6) und einer Mantelfläche (5) des Grundkörpers (2) eine dritte Wandstärke (w3) ausgebildet ist, wobei die dritte Wandstärke (w3) größer ist als die erste Wandstärke (w1) oder wobei die dritte Wandstärke (w3) größer ist als die zweite Wandstärke (w2).

6. Temperiertes Bauteil (1) nach Anspruch 5, wobei der dritte Bereich ein Befestigungsbereich ist und wobei im dritten Bereich ein Befestigungsmittel ausgebildet oder angeordnet ist, insbesondere wobei das Befestigungsmittel durch eine Gewindebohrung (11) gebildet wird.

7. Temperiertes Bauteil (1) nach einem der voranstehenden Ansprüche, wobei dem temperierbaren Hohlraum (6) ein Temperiermitteleingang und ein Temperiermittelausgang zugeordnet ist.

8. Temperiertes Bauteil (1) nach einem der voranstehenden Ansprüche, wobei es sich um ein Bauteil (1) einer Rührwerkskugelmühle oder einer Kugelmühle handelt, insbesondere um eine Rührwelle oder um eine Mahlscheibe oder um eine Verschleißscheibe an einer Mahlraumwandung der Rührwerkskugelmühle oder Kugelmühle oder um einen Mahlbehälter der Rührwerkskugelmühle oder Kugelmühle.

9. Temperiertes Bauteil (1) nach einem der voranstehenden Ansprüche, wobei es sich um ein als 3D- Druckteil hergestelltes Bauteil (1) handelt.

10. Verfahren zur Herstellung eines temperierten Bauteils, insbesondere eines temperierten Bauteils (1) nach einem der Ansprüche 1 bis 19, wobei
a. mindestens ein mit einem Temperiermittel durchströmbarer Hohlraum (6) in einem Grundkörper (2) des Bauteils (1) integriert wird,
b. wobei mindestens ein Bereich (TB-II) ermittelt wird, in dem ein erhöhter Verschleiß des Bauteils (1) stattfindet,
c. wobei in einem ersten Bereich (TB-I) zwischen einer Innenmantelfläche des Hohlraums (6) und einer Mantelfläche (5) des Grundkörpers (2) eine erste Wandstärke (w1) ausgebildet wird,
d. wobei dem ermittelten Verschleißbereich (9) zwischen einer Innenmantelfläche des Hohlraums (6) und einer Mantelfläche (5) des Grundkörpers (2) eine zweite Wandstärke (w2) ausgebildet wird,
e. wobei die zweite Wandstärke (w2) größer ist als die erste Wandstärke.

11. Verfahren nach Anspruch 10, wobei innerhalb des Hohlraums (6) Stützstrukturen (13) ausgebildet und/oder angeordnet werden, insbesondere wobei im ersten Bereich (TB-I) eine erste Anzahl an ersten Stützstrukturen ausgebildet und/oder angeordnet werden und/oder wobei im zweiten Bereich (TB-II) eine zweite Anzahl an zweiten Stützstrukturen und/oder angeordnet werden.

12. Verfahren nach Anspruch 11, wobei die ersten Stützstrukturen und/oder der zweiten Stützstrukturen dahingehend optimiert werden, dass die Temperierung des Bauteils (1) optimiert wird, insbesondere durch eine geeignete Strömungsführung innerhalb des Hohlraums (6).

13. Verfahren nach einem der Ansprüche 10 bis 12, wobei das Bauteil (1) vermittels 3D- Druck hergestellt wird.
